# EUROPEAN PATENT SPECIFICATION

(11) **EP 1 391 697 B1**
(45) Date of publication and mention of the grant of the patent: **01.10.2008**
(21) Application number: 03254843.0
(22) Date of filing: 01.08.2003
(51) Int. Cl.: G01D 9/00, H04L 9/32

(54) **Measurement authentication**
Authentifizierung einer Messung
Authentification d'une mesure

(30) Priority: 14.08.2002 US 218320
(43) Date of publication of application: 25.02.2004
(73) Proprietor: Agilent Technologies, Inc., Santa Clara, CA 95051 (US)
(72) Inventor: Eidson, John C., Palo Alto California 94303 (US)
(74) Representative: Tollett, Ian

(56) References cited:
- DE-U- 20 015 077
- FR-A- 2 814 628
- US-B1- 6 269 446
- KELSEY J ET AL: "AN AUTHENTICATED CAMERA" PROCEEDINGS. ANNUAL COMPUTER SECURITY APPLICATIONS CONFERENCE, XX, XX, 9 December 1996 (1996-12-09), pages 24-30, XP002167760

## Description

The present invention pertains to a method and system for authenticating a measurement and to a measurement device.

It is often desirable in a variety of applications to authenticate the fact that a particular measurement occurred at a specific location and/or at a specific time. Such space/time authentication may have important legal ramifications or other consequences with respect to the measurement. For example, it may be desirable to prove that a photograph was taken at a particular time and at a particular location when used by police, insurers, and others. Other examples include measurements of pollution violations, verifying movement of dangerous material, measurements critical to establishing intellection property rights, etc.

Prior techniques for authenticating the fact that a particular measurement occurred at a specific location and/or at a specific time typically rely on statements made by individuals involved in the measurement. Unfortunately, such techniques are commonly vulnerable to human errors such as mistakes in determining a location or properly obtaining time or failures in human memory as well as fraudulent statements.

A system is disclosed with methods and apparatus for authenticating measurements that resist human errors and attempts to render or present fraudulent measurements. A system according to the present teachings obtains a measurement and substantially contemporaneously determines a set of one or more space/time parameters for the measurement. The system includes methods and apparatus for generating a certificate in response to the measurement and the space/time parameters such that the certificate enables a determination of whether a set of alleged data is the measurement obtained according to the space/time parameters.

FR 2814628 discloses an apparatus in the form of a closed and sealed chamber containing a camera, a clock, a satellite positioning system, a gyroscope and a rangefinder. The apparatus stores its identity using a private key and a certificate as long as the chamber is not opened. The apparatus may also include a mobile telecommunication device for accessing a mobile telephone network.

According to a first aspect of the present invention there is provided a method as claimed in claim 1.

According to a second aspect of the present invention there is provided a system as claimed in claim 4.

Other features and advantages of a number of preferred embodiments of the present invention will be apparent from the detailed description that follows.

Particular exemplary embodiments of the invention will now be described and reference is accordingly made to the drawings in which:
**Figure 1** shows a method for authenticating a measurement according to the present teachings;
**Figure 2** shows a system for authenticating a measurement according to one embodiment of the present teachings;
**Figure 3** shows a system for authenticating a measurement according to another embodiment of the present teachings.

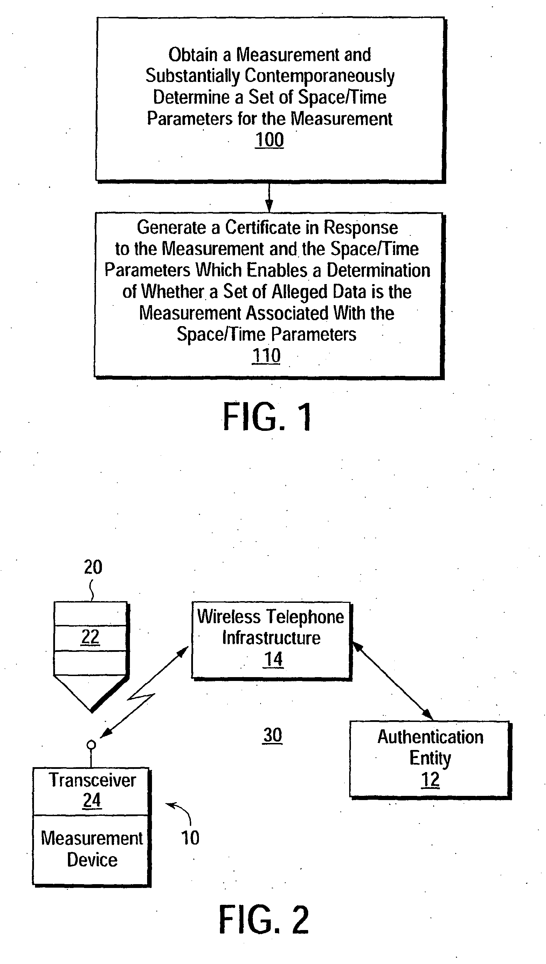

**Figure 1** shows a method for authenticating a measurement according to the present teachings. At step 100, the measurement is obtained and substantially contemporaneously a set of one or more space/time parameters for the measurement is determined. The space/time parameters may include a location at which the measurement was obtained or a time stamp which indicates a time at which the measurement was obtained or a combination of location and time stamp.

Examples of measurements are numerous and include photographs or other light measurements, temperature measurements, pressure measurements, chemical measurements, measurements rendered by motion sensors or electrical signal sensors, to name a few examples. The measurement obtained at step 100 is represented in the form of digital data. The measurement at step 100 may be obtained by a device having the appropriate hardware/software for rendering a measurement as appropriate.

A location obtained at step 100 indicates the geographic location at which the measurement of step 100 is obtained. A location determined at step 100 in one embodiment is a latitude and a longitude which is represented in the form of digital data. A time stamp obtained at step 100 may include data and time according to a standard and is represented in the form of digital data.

At step 110, a certificate is generated in response to the measurement and the space/time parameters from step 100. The certificate generated at step 110 enables a determination of whether a set of alleged data corresponds to the measurement and the space/time parameters.

The certificate may be generated at step 110 using well known techniques including encryption. For example, a cryptographic signature may be applied to the measurement and the space/time parameters obtained at step 100 thereby yielding a digitally signed certificate. Thereafter, the digitally signed certificate may be used to determine whether a set of alleged data is authentic, i.e. that it matches the measurement and the space/time parameters obtained at step 100. The cryptographic signature may be a public-private key system.

For example, the measurement obtained at step 100 may be a digital data value M0 and the space/time parameters obtained at step 100 may yield a digital data value P0 which may include a location and/or a time stamp. The certificate yielded by step 110 may be a digital data value C0. An individual or organization may hold the certificate C0 as proof that the measurement M0 was obtained at a location and/or a time given by P0. If that individual or organization wishes to prove the authenticity of a set of data A0 which is alleged to be the measurement M0 obtained at the space/time parameters P0, that individual or organization may present the alleged data A0 along with the certificate C0 to an authenticating entity. The authenticating entity decrypts C0 using an appropriate key which reveals M0 and P0 from C0. The alleged data A0 may then be compared to M0 and a match indicates that A0 is the measurement obtained at the location and/or time specified by P0.

**Figure 2** shows a system 30 for authenticating a measurement according to one embodiment of the present teachings. The system 30 includes a measurement device 10 that generates a measurement 22. The measurement device 10 in this embodiment includes a transceiver 24 that enables communication via a wireless telephone infrastructure 14.

The measurement device 10 obtains the measurement 22 and substantially contemporaneously with obtaining the measurement 22 it transfers the measurement 22 to an authentication entity 12 in a message 20 via the wireless telephone infrastructure 14. The authentication entity 12 obtains the measurement 22 from the message 20 and determines a location of the measurement device 10.

The authentication entity 12 determines the location of the measurement device 10 by querying the wireless telephone infrastructure 14. The wireless telephone infrastructure 14 may determine the location of the measurement device 10 using cell site identifiers, triangulation or other techniques.

The authentication entity 12 then generates a certificate in response to the measurement 22 and the location obtained from the wireless telephone infrastructure 14. The authentication entity 12 may also generate a time stamp using its own real-time clock when the measurement 22 is received and incorporate the time stamp into the certificate.

It is preferable that a relatively short time span be allowed to pass between generation of the measurement 22 in the measurement device 10 and the receipt of the message 20 by the authentication entity 12. This would hinder attempts to falsify a measurement location by obtaining the measurement 22 at one location and then moving to another location and initiating the phone call that carries the message 20 to the authentication entity 12. This would also hinder attempts to falsify measurement times.

For example, the measurement device 10 may undergo a certification process which ensures that it is not capable of storing the measurement 22 for long periods of time and/or that it can only obtain a measurement during a telephone call to the authentication entity 12. The measurement device 10 in such an embodiment initiates a wireless phone call and then generates the measurement 22 and transmits it on the fly to the authentication entity 12 during the wireless phone call.
In another example, the measurement device 10 may be implemented with a tamper resistant real-time clock that generates a time-stamp at or near the time when the measurement 22 is generated. The time-stamp is sent to the authentication agency 12 in the message 20 and the authentication entity 12 compares the time-stamp to the time of receipt of the message 20 to determine whether an unreasonable delay has occurred.

The measurement device 10 may include a GPS receiver that generates a location when the measurement 22 is obtained and transfer the location to the authentication entity 12 in the message 20. The GPS receiver may be tamper resistant to hinder falsified data. In addition, the authentication entity 12 may verify the location contained in the message 20 by querying the wireless telephone infrastructure 14 for the location of the measurement device 10 once the message 20 is received.

The measurement device 10 may be a digital camera, a temperature sensor, a pressure sensor, a chemical sensor, a motion sensor, an electrical signal sensor, or any other type of device capable of rendering a digital measurement. The measurement device 10 may have the transceiver 24 built in or attached with an appropriate possibly tamper resistant interface.

The authentication entity 12 may be an organization or device or combination that provides a measurement authentication service using the present techniques. The authentication entity 12 may be a partially or fully automated system including the computational resources used to apply digital encryption and decryption as needed to generate certificates and to use certificates to authenticate alleged data. The authentication entity that generates the certificate need not be the same entity that authenticates alleged data.

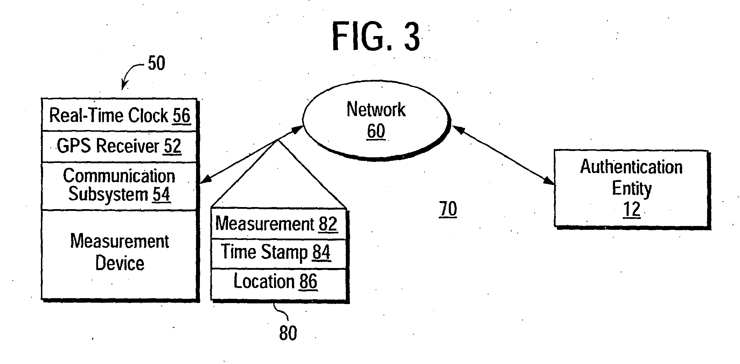

**Figure 3** shows a system 70 for authenticating a measurement according to another embodiment of the present teachings. The system 70 includes a measurement device 50 that generates a measurement 82. The measurement device 50 in this embodiment includes a real-time clock 56, a global positioning system (GPS) receiver 52, and a communication subsystem 54. The communication subsystem 54 enables communication via a network 60.

The measurement device 50 obtains the measurement 82 and substantially contemporaneously with obtaining the measurement 82 it obtains a time stamp 84 from the real-time clock 56 and a location 86 from the GPS receiver 52. The measurement device 50 may undergo a certification to ensure its real-time clock 56 and GPS receiver 52 are tamper resistant in the sense that these elements may not be easily manipulated to create a substantially delay between the time-stamp 84 and the location 86 and the sampling of the measurement 82.

The measurement device 50 transfers the time-stamp 84 and the location 86 and the measurement 82 to the authentication entity 12 in a message 80 via the network 60. The authentication entity 12 then generates a certificate in response to the measurement 82 and the location 86 and the time stamp 84 as discussed above.

The network 60 may support Internet protocols and the message 80 may be transferred to the authentication entity using web protocols. For example, the communication subsystem 52 may include the functionality for acting as a web client to a web server in the authentication entity 12.

The measurement device 50 may be a digital camera, a temperature sensor, a pressure sensor, a chemical sensor, a motion sensor, an electrical signal sensor, or any other type of device capable of rendering a digital measurement. The measurement device 50 may have the real-time clock 56 and the GPS receiver 52 and the communication subsystem 54 each built in or attached with an appropriate, possibly tamper resistant, interface or any combination thereof.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. A method tor authenticating a measurement (22,82), comprising the steps of:
obtaining the measurement (22,82) and substantially contemporaneously determining a set of one or more space/time parameters for the measurement (22,82); and
generating a certificate in response to the measurement (22,82) and the space/time parameters such that the certificate enables a determination of whether a set of alleged data corresponds to the measurement (22,82) and the space/time parameters;
**characterized in that** the step of determining the space/time parameters comprises the step of determining a location for the measurement (22,82) by means of a wireless telephone infrastructure.

2. A method as claimed in claim 1, **characterized in that** the step of determining the space/time parameters comprises the step of generating a time stamp substantially contemporaneously with the step of obtaining the measurement (22,82).

3. A method as claimed in claim 1 or claim 2, **characterized in that** the step of generating a certificate comprises the step of applying a cryptographic signature to the measurement (22,82) and the space/time parameters.

4. A system for authenticating a measurement (22, 82), comprising:
measurement device (10,50) that obtains the measurement (22,82);
means for determining a set of one or more space/time parameters for the measurement (22,82); and
authentication entity (12) that is configured to generate a certificate in response to the measurement (22,82) and the space/time parameters such that the certificate enables a determination of whether a set of alleged data corresponds to the measurement (22,82) and the space/time parameters;
**characterized in that** the means for determining a set of one or more space/time parameters comprises means for determining a location of the measurement device (10,50) by means of a wireless telephone infrastructure between the measurement device (10,50) and the authentication entity (12).

5. A system as claimed in claim 4, **characterized in that** the authentication entity (12) is configured to determine the location during a wireless telephone call to the measurement device (10,50).

6. A system as claimed in claim 4 or claim 5, **characterized in that** the means for determining a location comprises a GPS receiver.

7. A system as claimed in any one of claims 4 to 6, **characterized in that** the means for determining a set of one or more space/time parameters comprises means for generating a time stamp for the measurement (22,82).

8. A system as claimed in claim 7, **characterized in that** the means for generating a time stamp comprises a real-time clock in the measurement device (10,50).

9. A system as claimed in claim 7, **characterized in that** the authentication entity (12) is configured to determine the time stamp during a wireless telephone call to the device.

10. A system as claimed in claim 7, **characterized in that** the means for generating a time stamp comprises a real-time clock associated with the authentication entity (12).

11. A system as claimed in any one of claims 4 to 10, **characterized in that** the measurement device includes means for providing the measurement to transfer the measurement (22,82) to the authentication entity (12) on the fly during a wireless phone call.

## Patentansprüche

1. Ein Verfahren zum Authentifizieren einer Messung (22, 82), das die folgenden Schritte aufweist:
Erhalten der Messung (22, 82), und im Wesentlichen gleichzeitig, Bestimmen eines Satzes eines oder mehrerer Raum/Zeit-Parameter für die Messung (22, 82); und
Erzeugen eines Zertifikats ansprechend auf die Messung (22, 82) und die Raum/Zeit-Parameter, derart, dass das Zertifikat eine Bestimmung dessen ermöglicht, ob ein Satz von vermeintlichen Daten der Messung (22, 82) und den Raum/Zeit-Parametern entspricht;
**gekennzeichnet dadurch, dass** der Schritt des Bestimmens der Raum/Zeit-Parameter den Schritt eines Bestimmens eines Ortes für die Messung (22, 82) durch eine Funkfernsprechinfrastruktur aufweist.

2. Ein Verfahren gemäß Anspruch 1, **gekennzeichnet dadurch, dass** der Schritt des Bestimmens der Raum/Zeit-Parameter den Schritt eines Erzeugens eines Zeitstempelns im Wesentlichen gleichzeitig mit dem Schritt des Erhaltens der Messung (22, 82) aufweist.

3. Ein Verfahren gemäß Anspruch 1 oder 2, **gekennzeichnet dadurch, dass** der Schritt des Erzeugens eines Zertifikats den Schritt eines Anwendens einer Verschlüsselungssignatur auf die Messung (22, 82) und die Raum/Zeit-Parameter aufweist.

4. Ein System zum Authentifizieren einer Messung (22, 82), das folgende Merkmale aufweist:
eine Messvorrichtung (10, 50), die die Messung (22, 82) erhält;
eine Einrichtung zum Bestimmen eines Satzes eines oder mehrerer Raum/Zeit-Parameter für die Messung (22, 82); und
eine Authentifizierungsentität (12), die zum Erzeugen eines Zertifikats ansprechend auf die Messung (22, 82) und die Raum/Zeit-Parameter konfiguriert ist, derart, dass das Zertifikat eine Bestimmung dessen ermöglicht, ob ein Satz von vermeintlichen Daten der Messung (22, 82) und den Raum/Zeit-Parametern entspricht;
**gekennzeichnet dadurch, dass** die Einrichtung zum Bestimmen eines Satzes eines oder mehrerer Raum/Zeit-Parameter eine Einrichtung zum Bestimmen eines Ortes der Messvorrichtung (10, 50) durch eine Funkfernsprechinfrastruktur zwischen der Messvorrichtung (10, 50) und der Authentifizierungsentität (12) aufweist.

5. Ein System gemäß Anspruch 4, **gekennzeichnet dadurch, dass** die Authentifizierungsentität (12) zum Bestimmen des Ortes während einer des Funkfernsprechrufverbindung mit der Messvorrichtung (10, 50) konfiguriert ist.

6. Ein System gemäß Anspruch 4 oder 5, **gekennzeichnet dadurch, dass** die Einrichtung zum Bestimmen eines Ortes einen GPS-Empfänger aufweist.

7. Ein System gemäß einem der Ansprüche 4 bis 6, **gekennzeichnet dadurch, dass** die Einrichtung zum Bestimmen eines Satzes eines oder mehrerer Raum/Zeit-Parameter eine Einrichtung zum Erzeugen eines Zeitstempels für die Messung (22, 82) aufweist.

8. Ein System gemäß Anspruch 7, **gekennzeichnet dadurch, dass** die Einrichtung zum Erzeugen eines Zeitstempels eine Echtzeituhr in der Messvorrichtung (10, 50) aufweist.

9. Ein System gemäß Anspruch 7, **gekennzeichnet dadurch, dass** die Authentifizierungsentität (12) zum. Bestimmen des Zeitstempels während einer Funkfernsprechrufverbindung mit der Vorrichtung konfiguriert ist.

10. Ein System gemäß Anspruch 7, **gekennzeichnet dadurch, dass** die Einrichtung zum Erzeugen eines Zeitstempels eine der Authentifizierungsentität (12) zugeordnete Echtzeituhr aufweist.

11. Ein System gemäß einem der Ansprüche 4 bis 10, **gekennzeichnet dadurch, dass** die Messvorrichtung eine Einrichtung zum Bereitstellen der Messung umfasst, um die Messung (22, 82) während einer Funkfernsprechrufverbindung im Lauf zu der Authentifizierungsentität (12) zu übertragen.

## Revendications

1. Méthode permettant d'authentifier une mesure (22, 82), comprenant les étapes consistant à :
obtenir la mesure (22, 82) et déterminer sensiblement en même temps un ensemble d'un ou plusieurs paramètres spatiaux/temporels pour la mesure (22, 82) ; et
générer un certificat en réponse à la mesure (22, 82) et aux paramètres spatiaux/temporels de sorte que le certificat permette une détermination de si un ensemble de données alléguées correspond à la mesure (22, 82) et aux paramètres spatiaux/temporels ;
**caractérisée en ce que** l'étape consistant à déterminer les paramètres spatiaux/temporels comprend l'étape consistant à déterminer une localisation pour la mesure (22, 82) au moyen d'une infrastructure téléphonique sans fil.

2. Méthode selon la revendication 1, **caractérisée en ce que** l'étape consistant à déterminer les paramètres spatiaux/temporels comprend l'étape consistant à générer une estampille temporelle sensiblement en même temps que l'étape consistant à obtenir le mesure (22, 82).

3. Méthode selon la revendication 1 ou la revendication 2, **caractérisée en ce que** l'étape consistant à générer un certificat comprend l'étape consistant à appliquer une signature cryptographique à la mesure (22, 82) et aux paramètres spatiaux/temporels.

4. Système permettant d'authentifier une mesure (22, 82), comprenant :
un dispositif de mesure (10, 50) qui obtient la mesure (22, 82) ;
des moyens pour déterminer un ensemble d'un ou plusieurs paramètres spatiaux/temporels pour la mesure (22, 82) ; et
une entité d'authentification (12) qui est configurée pour générer un certificat en réponse à la mesure (22, 82) et aux paramètres spatiaux/temporels de sorte que le certificat permette une détermination de si un ensemble de données alléguées correspond à la mesure (22, 82) et aux paramètres spatiaux/temporels ;
**caractérisé en ce que** les moyens pour déterminer un ensemble d'un ou plusieurs paramètres spatiaux/temporels comprennent des moyens pour déterminer une localisation du dispositif de mesure (10, 50) au moyen d'une infrastructure téléphonique sans fil entre le dispositif de mesure (10, 50) et l'entité d'authentification (12).

5. Système selon la revendication 4, **caractérisé en ce que** l'entité d'authentification (12) est configurée pour déterminer la localisation au cours d'un appel téléphonique sans fil au dispositif de mesure (10, 50).

6. Système selon la revendication 4 ou la revendication 5, **caractérisé en ce que** les moyens pour déterminer une localisation comprennent un récepteur GPS.

7. Système selon l'une quelconque des revendications 4 à 6, **caractérisé en ce que** les moyens pour déterminer un ensemble d'un ou plusieurs paramètres spatiaux/temporels comprennent des moyens pour générer une estampille temporelle pour la mesure (22, 82).

8. Système selon la revendication 7, **caractérisé en ce que** les moyens pour générer une estampille temporelle comprennent une horloge temps réel dans le dispositif de mesure (10, 50).

9. Système selon la revendication 7, **caractérisé en ce que** l'entité d'authentification (12) est configurée pour déterminer l'estampille temporelle au cours d'un appel téléphonique sans fil au dispositif.

10. Système selon la revendication 7, **caractérisé en ce que** les moyens pour générer une estampille temporelle comprennent une horloge temps réel associée à l'entité d'authentification (12).

11. Système selon l'une quelconque des revendications 4 à 10, **caractérisé en ce que** le dispositif de mesure comprend des moyens pour fournir la mesure pour transférer la mesure (22, 82) à l'entité d'authentification (12) à la volée au cours d'un appel téléphonique sans fil.
